# EUROPÄISCHE PATENTSCHRIFT

(11) **EP 1 223 499 B1**
(45) Veröffentlichungstag und Bekanntmachung des Hinweises auf die Patenterteilung: **01.10.2008**
(21) Anmeldenummer: 01128651.5
(22) Anmeldetag: 30.11.2001
(51) Int. Cl.: G06F 1/18

(54) **Rechner**
Computer
Ordinateur

(30) Priorität: 27.12.2000 DE 10065377
(43) Veröffentlichungstag der Anmeldung: 17.07.2002
(73) Patentinhaber: Fujitsu Siemens Computers GmbH, 80807 München (DE)
(72) Erfinder: Neukam, Wilhelm, 86399 Bobingen (DE)
(74) Vertreter: Epping - Hermann - Fischer

(56) Entgegenhaltungen:
- US-A- 5 749 637
- US-A- 5 934 774

## Beschreibung

Die Erfindung betrifft einen Computer mit einem Gehäuse, das eine Standseite und zumindest eine weitere Seite aufweist, auf die der Computer stellbar ist.

In der Regel sind nahezu alle Computergehäuse so ausgebildet, daß sie sowohl als Desktop- als auch ob als Towergehäuse im wesentlichen eine quaderförmige Geometrie besitzen.

US 5 934 774 und US 5 749 637 offenbaren Computergehäuse, die zur Verwendung sowohl als Desktop- als auch als Towergehäuse geeignet sind und die Elemente aufweisen, die eine stabile Lage als Towergehäuse gewährleisten.

Durch die immer leistungsfähiger werdenden Prozessoren erhöht sich auch die Wärmeabgabe des Prozessors, wodurch die Anforderungen bezüglich des Wärmehaushaltes innerhalb des Computers mehr und mehr Einfluß auf die Konstruktion des Computers nehmen.

So muß zum Beispiel bei modernen leistungsfähigen Computern aus klimatechnischen Bedingungen gewährleistet sein, daß der Kunde ein Gerät nur in einer bestimmten Lage aufstellt. Bisher wurde die Aufstellrichtung beziehungsweise die Aufstellage des Computers im Handbuch vorgegeben.

Handbücher werden jedoch oft nicht gelesen beziehungsweise ignoriert, so daß aus klimatechnischen Gründen es zu Ausfällen beziehungsweise zu einem kompletten Defekt des Computers bei ungewollter Aufstellage kommen konnte.

Der Erfindung liegt daher die Aufgabe zugrunde, eine Lösung aufzuzeigen, durch welche gewährleistet ist, daß ein Computer nur in der vorbestimmten Lage aufstellbar ist.

Diese Aufgabe wird erfindungsgemäß dadurch gelöst, daß diejenige Seite des Computers, auf die der Computer nicht gestellt werden soll, mit einer nach außen vorspringenden Geometrie versehen ist, die ein freies Aufstellen auf diese Seite nicht zuläßt.

Die nach außen vorspringende Geometrie kann zum Beispiel in Form einer nach außen abstehenden bogenförmigen Rundung, jedoch ebenfalls als nach außen abstehende Schräge beziehungsweise Dorn oder Zapfen ausgebildet sein.

Vorzugsweise ist die nach außen vorspringende Geometrie als Kunststoffteil ausgebildet, welche über Zapfen in entsprechende Bohrungen lediglich in das Gehäuse einsteckbar sind.

Durch die nach außen vorspringende Geometrie wird in einfachster und kostengünstigster Weise garantiert, daß die Aufstellung des Computers in einer ungewünschten Lage verhindert wird.

Nachfolgend wird die Erfindung anhand eines in den Zeichnungen dargestellten Ausführungsbeispieles näher erläutert.

In den Zeichnungen zeigen:
- Figur 1: eine Schrägansicht eines Desktopcomputergehäuses und
- Figur 2: eine weitere Schrägansicht des Desktopcomputergehäuses.

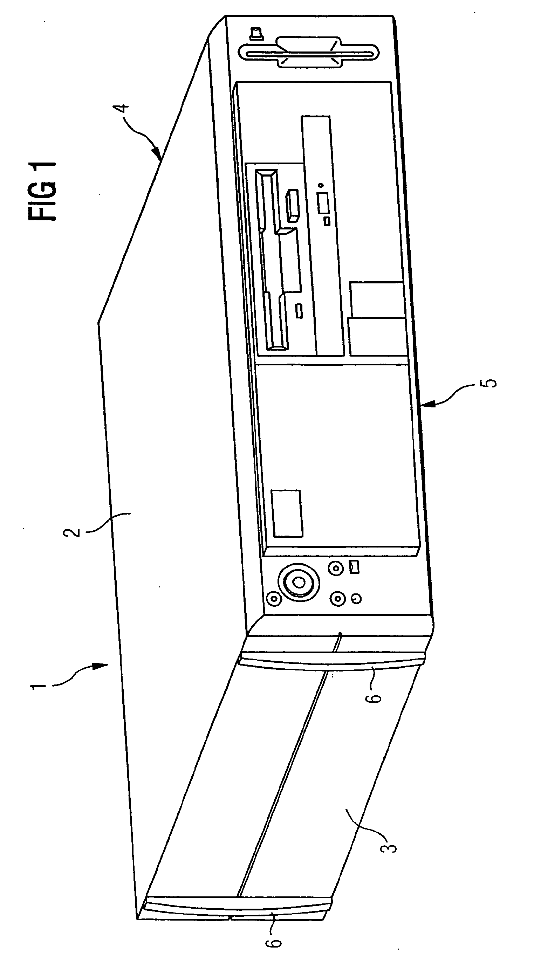

Figur 1 zeigt in Schrägansicht einen Computer mit einem im wesentlichen quaderförmigen Gehäuse 1, mit einer Oberseite 2, zwei Seitenflächen 3 und 4 sowie einer Standseite 5 an der Unterseite. Bei diesem Gehäuse 1 soll aus klimatechnischen Gründen innerhalb des Gehäuses eine Aufstellung auf der Gehäuseseite 3 vermieden werden.

Erfindungsgemäß sind hierzu an der Gehäuseseite 3 nach außen vorspringende Geometrien 6 angebracht, welche somit ein stabiles Aufstellen auf der Seite 3 nicht erlauben. Die nach außen vorspringenden Geometrien 6 sind in diesem Fall als nach außen vorspringende Rundungen, welche sich über die komplette Breite der Seite 3 erstrecken, ausgebildet. Die nach außen vorspringenden Geometrien 6 können ebenfalls als nach außen vorspringende Schrägen, Zapfen, Dornen oder der gleichen ausgebildet sein, welche ebenfalls keine stabile Aufstellung des Computergehäuses auf dieser Seite erlauben.

Hergestellt sind die nach außen vorspringenden Geometrien 6 vorzugsweise aus Kunststoff und werden mit dem Computergehäuse 1 entweder verschraubt oder lediglich über Zapfen mit Rasthacken in entsprechende Bohrungen im Computergehäuse 1 eingesteckt.

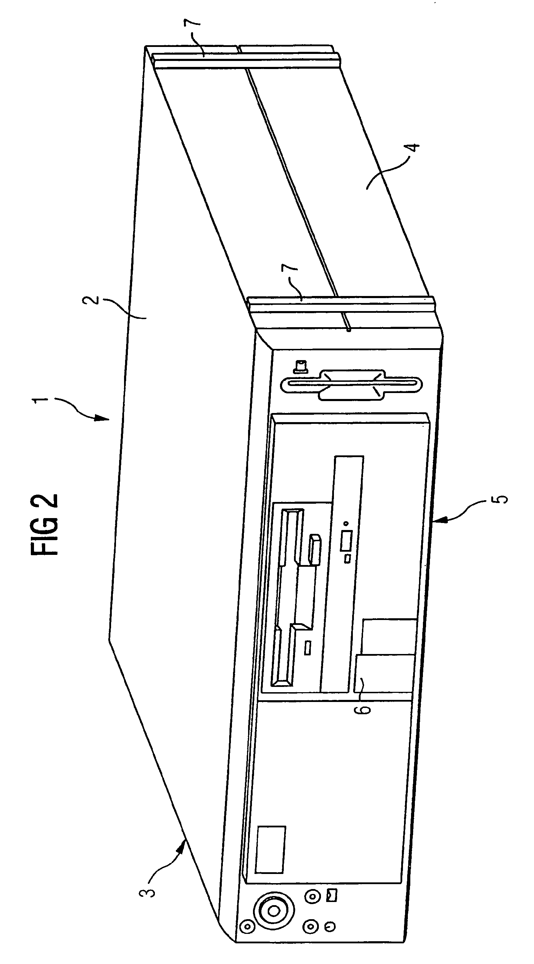

Figur 2 zeigt den Computer gemäß Figur 1 in einer leicht gedrehten Schrägansicht mit Blick auf die Seitenfläche 4. Um dem Kunden zu signalisieren, daß eine Aufstellrichtung auf der Seitenfläche 4 erlaubt ist, ist diese mit nach außen vorspringenden ebenen Geometrien 7 versehen, auf welche das Gerät beziehungsweise das Computergehäuse 1 gestellt werden kann.

## Patentansprüche

1. Computer mit einem Gehäuse (1), das eine Standseite (5) und zumindest eine weitere Seite (3) aufweist, auf die der Computer stellbar ist,
**dadurch gekennzeichnet, daß**
diejenige Seite (3) des Computers, auf die der Computer nicht gestellt werden soll, mit einer nach außen vorspringenden Geometrie (6) versehen ist, die ein freies Aufstellen auf dieser Seite nicht zuläßt.

2. Computer nach Anspruch 1,
**dadurch gekennzeichnet, daß**
die nach außen vorspringende Geometrie (6) durch Abrundungen gebildet ist.

3. Computer nach Anspruch 1,
**dadurch gekennzeichnet, daß**
die nach außen vorspringende Geometrie (6) als nach außen abstehende Schräge ausgebildet ist.

4. Computer nach Anspruch 1,
**dadurch gekennzeichnet, daß**
die nach außen vorspringende Geometrie (6) in Form von nach außen abstehenden Stiften, Zapfen beziehungsweise Dornen ausgebildet ist.

5. Computer nach einem der Ansprüche 1 bis 4,
**dadurch gekennzeichnet, daß**
die nach außen vorspringende Geometrie (6) als Kunststoffteil ausgebildet ist.

6. Computer nach Anspruch 5,
**dadurch gekennzeichnet, daß**
die nach außen vorspringende Geometrie (6) über Zapfen mit Rasthacken in entsprechende Bohrungen am Gehäuse (1) des Computers fixierbar ist.

## Claims

1. Computer with a housing (1) having a standing side (5) on which the computer can be stood, and at least one further side (3),
**characterized in that**
**that** side (3) of the computer on which the computer is not supposed to be stood is provided with an outwardly projecting geometry (6) which does not allow free erection on this side.

2. Computer according to Claim 1,
**characterized in that**
the outwardly projecting geometry (6) is formed by rounded-off portions.

3. Computer according to Claim 1,
**characterized in that**
the outwardly projecting geometry (6) is in the form of an outwardly protruding bevel.

4. Computer according to Claim 1,
**characterized in that**
the outwardly projecting geometry (6) is in the form of outwardly protruding pins, studs or spikes.

5. Computer according to one of Claims 1 to 4,
**characterized in that**
the outwardly projecting geometry (6) is in the form of a plastic part.

6. Computer according to Claim 5,
**characterized in that**
the outwardly projecting geometry (6) can be fixed in corresponding holes in the housing (1) of the computer by means of studs having latching hooks.

## Revendications

1. Ordinateur comprenant un boîtier (1), qui présente un côté d'appui (5) sur lequel l'ordinateur peut être posé, et au moins un autre côté (3),
**caractérisé en ce que**
le côté (3) de l'ordinateur sur lequel l'ordinateur ne doit pas être posé est pourvu d'une géométrie (6) saillant vers l'extérieur qui ne permet pas de poser librement l'ordinateur sur ce côté.

2. Ordinateur selon la revendication 1,
**caractérisé en ce que**
la géométrie (6) saillant vers l'extérieur est formée par des arrondis.

3. Ordinateur selon la revendication 1,
**caractérisé en ce que**
la géométrie (6) saillant vers l'extérieur est réalisée sous forme de biseaux saillant vers l'extérieur.

4. Ordinateur selon la revendication 1,
**caractérisé en ce que**
la géométrie (6) saillant vers l'extérieur est réalisée sous forme de broches, ergots ou picots saillant vers l'extérieur.

5. Ordinateur selon l'une quelconque des revendications 1 à 4,
**caractérisé en ce que**
la géométrie (6) saillant vers l'extérieur est réalisée sous forme de pièce en plastique.

6. Ordinateur selon la revendication 5,
**caractérisé en ce que**
la géométrie (6) saillant vers l'extérieur peut être fixée par le biais d'ergots avec des crochets d'encliquetage dans des alésages correspondants sur le boîtier (1) de l'ordinateur.
